# EUROPÄISCHE PATENTANMELDUNG

(11) **EP 1 143 339 A1**
(43) Veröffentlichungstag der Anmeldung: **10.10.2001**
(21) Anmeldenummer: 01107505.8
(22) Anmeldetag: 26.03.2001
(51) Int. Cl.: G06F 11/36

(54) **Testagenten für Mehrbenutzeranwendungen**

(30) Priorität: 04.04.2000 DE 10016718
(71) Anmelder: SIEMENS AKTIENGESELLSCHAFT, 80333 München (DE)
(72) Erfinder: Paelke, Volker, 33098 Paderborn (DE)

(57) **Zusammenfassung**

Verfahren und Anordnung zum Testen eines Computerprogramms mit konkurrierden Benutzern, wobei einem Interaktionsmodul eines menschlichen Benuzters mehrere programmierte Agenten gegenüberstehen, die die anderen Benutzer simulieren.

## Beschreibung

### Technisches Gebiet

Die Erfindung betrifft eine Einrichtung und ein Verfahren zum Test von Computer-Anwendungen, bei denen die konkurrierende Benutzung durch mehrere Benutzer vorgesehen ist.

### Stand der Technik

In modernen Computerprogrammen haben die Benutzerschnittstellen eine hohe Komplexität erreicht. Eine Teilaufgabe bei der Erstellung solcher Programme ist daher die Überprüfung, ob diese Schnittstelle auch für einen Benutzer gut erlernbar und weitgehend frei von verwirrendem Verhalten ist. Dies wird letztendlich durch ausführliche Versuche ermittelt, in denen ein Benutzer die verschiedenen Funktionen des Computerprogramms systematisch erprobt. Da die Computerprogramme deterministisch arbeiten (oder zumindest sollten), ist auch der Ablauf eines solchen Tests deterministisch und planbar. Nicht-deterministisches bzw. unverständliches Verhalten ist im Rahmen eines solchen Tests regelmäßig als Fehler anzusehen.

Besondere Probleme ergeben sich, wenn das Computerprogramm eine Anwendung ist, die mit anderen Anwendungen zusammen auf einer gemeinsamen Datenbasis arbeitet. Das gilt in besonderenm Maße, wenn mehrere Benutzer mit der selben Anwendung gleichzeitig, insbesondere von verschienenen Rechnern aus, auf den gleichen Daten arbeiten. Dann ist das Verhalten des Computerprogramms gegenüber dem Benutzer nicht mehr allein von dessen Aktionen, sondern insbesondere von der Interferenz der Aktionen der mehreren Benutzer abhängig. Wendet man die bekannten Methoden des Test von Einzel-Benutzer-Anwendung ohne weiteres auf Mehrbenutzer-Anwendungen an, dann sind die Tests in der Regel allein schon deshalb nicht reproduzierbar, weil die Zeit, in der ein Benutzer auf die Ausgaben des Systems durch neue Eingaben reagiert, nicht vorbestimmt ist und daher der von einem Benutzer nach einer gewissen Laufzeit des Test vorgefundene Zustand nicht derselbe wie beim vorherigen Versuch ist, selbst wenn alle Benutzer dieselbe Testvorschrift abarbeiten. Erschwerend kommt hinzu, daß bei einem Test der Interaktionskomponente, auch als Oberfläche bezeichnet, dem Probanden gerade nicht ein definitives Testprogramm vorgegeben wird, sondern nur eine eher allgemeine Aufgabe; beispielsweise "setzten Sie den Text von A4 in Äquidistanzschrift auf A5 in Proportialschrift um". Eine detaillierte Testvorschrift würde die Funktionalität testen und nicht die Frage, ob ein menschlicher Benutzer die Ausgaben adäquat interpretiert und so wenige wie möglich Irrwege beschreitet.

Die an sich naheliegende, wenn auch nicht primitive, Lösung, die Aktionen aller Testbenutzer zu synchronisieren, bedeutet eine Vielzahl von Nachteilen. Zum einen wird die Geschwindigkeit dem langsamsten Testbenutzer angepaßt und nicht nur die Testzeit unnötig erhöht. Vielmehr werden hierdurch eine Anzahl von Konflikten, die im späteren Einsatz auftreten würden, von vornherein vermieden und so die Test wesentlich entwertet. Dies ist insbesondere dadurch der Fall, daß die Test wesentlich primitiver ausfallen, um die zusätzliche Komplexität der Synchronisation einfügen zu können.

Man behilft sich bislang daher damit, daß zusätzlich zu dem den primären Test ausführenden, mit dem inneren Aufbau des Systems nicht vertrauten, Primärtester noch weitere, als 'Wizzard' bezeichnete Benutzer auftreten, die mit dem inneren Aufbau des Systems teilweise vertraut sind und sowohl die Situation des Primärtesters als auch den Gesamtzustand des Systems einsehen können. Diese Sekundärtester sollen die aus der Mehrbenutzer-Fähigkeit des Systems entstehenden Konflikte testen helfen. Dazu sind zwei einander gegensätzliche Verhaltensweisen der Sekundärtester erwünscht: Zum einen sollen die Sekundärtester möglichst deterministisch handeln, um den Versuch reproduzierbar zu halten. Zum anderen sollen Sie gerade Konflikte produzieren, die aus nichtdeterministischem Verhalten resultieren. Diese Rolle erfordert ein hohes Maß an Können, Wissen und Training und ist daher selten in dem eigentlich notwendigen Umfang anwendbar.

Aufgabe der Erfindung ist es daher, ein Testsystem für Mehrbenutzer-Anwendungen anzugeben, bei dem ein einzelner Testbenutzer dennoch die einem Mehrbenutzersystem inheränten Probemfelder testen kann.

### Darstellung der Erfindung

Die Erfindung beruht auf der Erkenntnis der Anforderungen an die Sekundärtester: Sie müssen schneller als der Primärtester ihre Entscheidung über ihren nächsten Schritt fällen können, sie müssen extrem gut reproduzierbar agieren und sie müssen gegebenenfalls eine große Anzahl von Parametern berücksichtigen, möglichst unter anderem auch den Kenntnis- und Enscheidungsstand der anderen Sekundärtester. Die Erfindung benutzt daher als Sekundärtester wiederum Computerprogramme und zeigt eine Methode auf, mit der diese als Sekundärtester fungierenden Computerprogramme integriert werden können.

Ein halbwegs realistisches Anwendungsbeispiel für die Erfindung ist ein Programm, mit dem ein Raum mit Einrichtungsgegenständen in 3-D-Sicht gezeigt wird und der Benuzter mittels eines Zeigegeräts (Maus) jeweils ein Einrichtungsgegenstand zur Zeit verschieben, d.h. an eine neue Position bewegen kann. Über eine gleichfalls durch die Maus steuerbare Einrichtung kann der Sichtwinkel verändert werden, von dem aus die 3-D-Sicht dargestellt wird. Daher können Gegestände durch andere verdeckt, d.h. aktuell nicht sichtbar sein, und damit die Zielposition eines zu verschiebenden Gegenstands bereits besetzt halten. Auch kann es vorkommen, daß zwei Benutzer zugleich denselben Gegenstand 'anfassen' und bewegen wollen. Eine einfach Möglichkeit wäre es, bereits mit dem 'anfassen', d.h. dem Betätigen und Halten der linken Maustaste, den Konflikt zu erfassen und dem Benutzer zu melden. Es ist jedoch auch erwünscht, den Konflikt erst mit dem effektiven Verschiebeauftrag zu melden. Eine effektive Testumgebung müßte beide Varianten gleichermaßen erproben. In der Praxis ergeben sich weitaus mehr zu erprobende Varianten. Ist schon die Auswahl von geeigneten Probanden für normale Benutzertests problematisch genug, so gilt dies in noch größerem Maße, wenn weitere Testbenutzer benötigt werden und die Ergebnisse dennoch nachvollziehbar sein sollen.

Als weiteres Problem sind die Blockage-Situationen genannt, deren algorithmische Erkennung allein schon schwierig ist. In diesen Blockage-Situationen reserviert A das Objekt a und B das Objekt b. Wollen jetzt A und B zusätzlich auch die Objekte b und a reservieren, d.h. die vom jeweils anderen bereits reservierten, so führt dies zu einer gegenseitigen Blockage. Es stellt sich die Frage, wie ein Testbenutzer, der jetzt auch noch das Objekt a reservieren will, erkennen kann, daß die Verklemmung nicht von seinem, sondern dem Verhalten der anderen Teilnehmer resultiert. Hierzu ist im Test genau diese Bedingung herbeizuführen. Dies gelingt, wenn zwei Agenten A und B eingesetzt werden, die so programmiert werden, daß die bei bevorstehendem Zugriff des Testbenutzers auf das Objekt a eine solche Verklemmung herbeiführen, aber sofort wieder aufgeben, wenn der Testbenutzer das Objekt a nicht mehr im Blickfeld hat.

Es zeigen
- Fig. 1: die prinzipielle Struktur der Erfindung,
- Fig. 2: eine mögliche Bildschirmdarstellung,
- Fig. 3: den Quelltext eines Agenten aus dem Beispiel,
- Fig. 4: den Quelltext des die Ausgabe nach Fig. 2 erzeugenden und die Anwendung nach Fig. 5 benutzenden Scripts,
- Fig. 5: den Quelltext der Anwendung aus dem Beispiel,
- Fig. 6: den HTML-Text, der zu der Anzeige nach Fig. 2 führt und vom Script nach Fig. 4 ausgegeben wird,
- Fig. 7: den Quelltext eines alternativen Agenten.

Im folgenden wird die Erfindung an Hand eines Beispiels dargestellt; das sehr stark vereinfacht wurde, um die Struktur besser zeigen zu können. Hierbei handelt es sich um ein primitives Spiel, bei dem zwei Spielsteine und fünf Plätze vorgesehen sind und jeweils ein Spielstein von einem besetzten auf einen freien Platz bewegt werden kann. Für die nachfolgenden Betrachtungen ist es unerheblich, was als 'gewonnen' oder 'verloren' gilt, weil die Erfindung sich lediglich mit der Interaktion des Benutzers mit einer Benutzeroberfläche, nicht jedoch mit deren Inhalten beschäftigt.

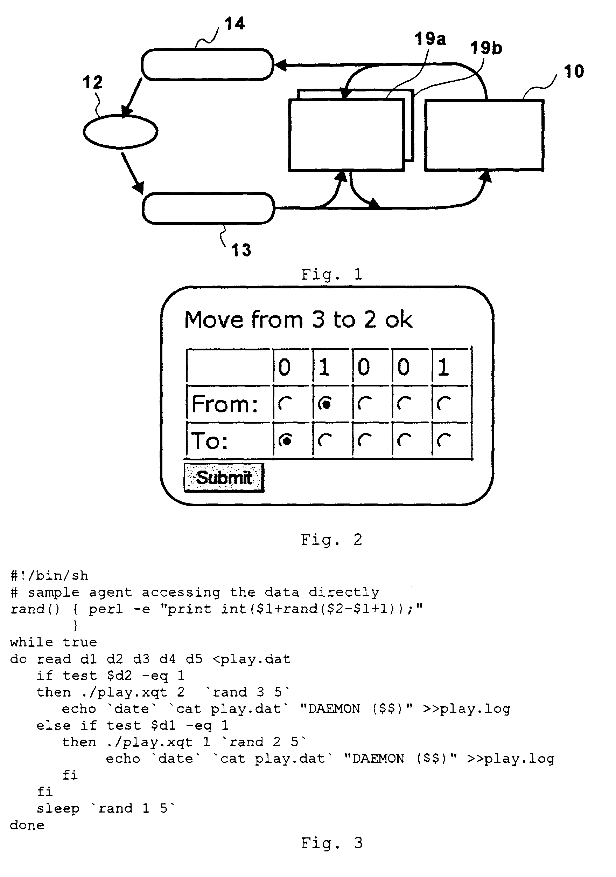

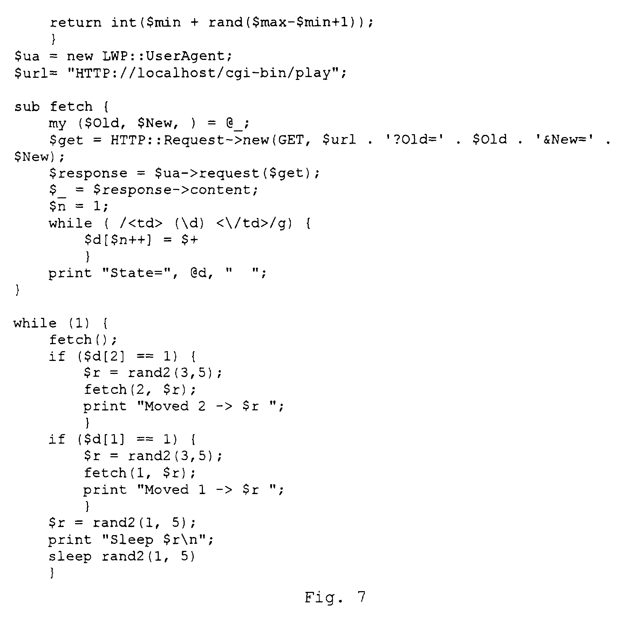

In Fig. 2 ist eine Bildschirmausgabe dargestellt, wie sie sich einem Benutzer darstellt, der das in Fig. 4 dargestellte Script aktiviert. Als Programmierumgebung wurde hier die Kombination der Darstellungssprache HTML mit dem Datenübertragungsprotokoll HTTP und einem HTTP-Server, der dynamisch Programme über die CGI-Schnittstelle aufruft, gewählt. Diese Internet-Techniken sind allgemein bekannt und in einer Vielzahl von Dokumenten beschrieben. Die nachfolgenden Beispiel wurden unter dem Betriebssystem Linux ausgeführt. Die Ausgaben des in Fig. 4 gezeigten Scripts werden mittels HTTP an ein Anzeigeprogramm, Browser genannt, übertragen, wenn der Benutzer als Adresse beispielssweise "http://my.server/cgi-bin/play" eingibt und das in Fig. 4 gezeigte Script unter dem Namen 'play' in dem Verzeichnis 'cgi-bin' abgespeichert ist. Das dadurch bewirkte HTML-Dokument ist in Fig. 6 gezeigt und führt zu einer Anzeige wie in Fig. 2. Lediglich sind anfänglich keiner der 'radio buttons' in der zweiten und dritten Zeile der Tabelle aktiviert.

In ersten Zeile in Fig. 2 wird eine Meldung ausgegeben; hier die Meldung, daß der vorherige Zug von Position 3 nach Position 2 erfolgreich durchgeführt wurden. In der Zeile darunter, der ersten Zeile der Tabelle, wird der aktuelle Spielstand dargestellt. Die nächsten beiden Zeilen erlauben es, jeweils den zu bewegenden Stein ('From') und das Ziel ('To') anzugeben. Mit dem Knopf 'Submit' wird dann der Zug an den Server übermittelt. Für das gezeigte Beispiel lautete die Anfrage typischerweise "http://my.server/cgi-bin/play?Old=2&New=1". Diese Anfrage wird wieder von demselben Script 'play' bearbeitet, welches in Fig. 2 gezeigt ist. Zu Begin werden die Parameter 'Old' und 'New' extrahiert. Wenn sie gesetzt sind, wird ein Zug durch Aufruf der eigentlichen Anwendung './play.xqt' versucht.

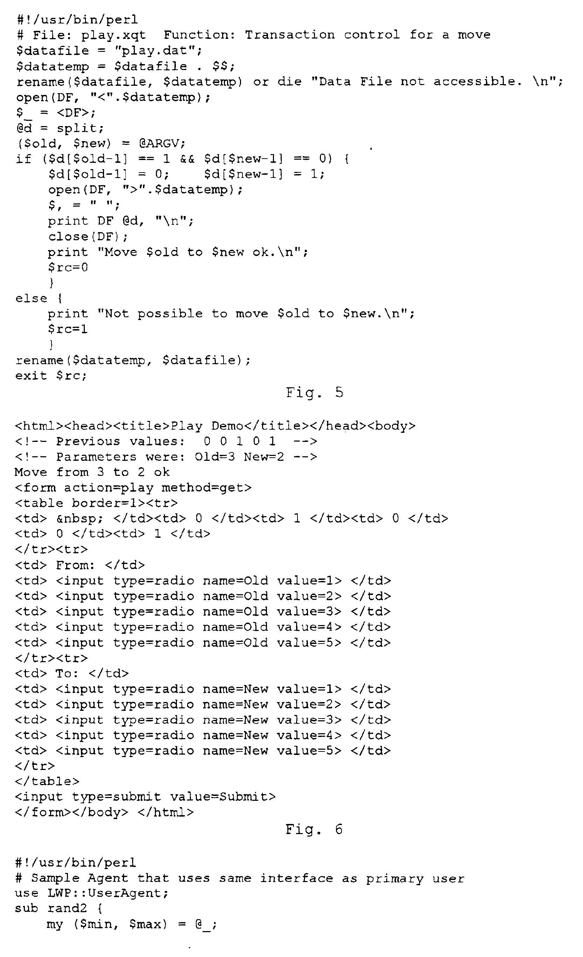

Die Anwendung ist in Fig. 5 dargestellt. Sie verwendet die gleichfalls in diesem Zusammenhang weit verbreitete Sprache 'perl'. Es wird der Spielstand aus der Datei 'play.dat' entnommen, nachdem diese durch Umbenennen in einen temporären Namen gesperrt wurde. Dann wird ermittelt, ob der Zug zulässig ist, eine Meldung und gegebenfalls der neue Stand ausgegeben. Schließlich wird die temporäre Datei wieder in 'play.dat' zurück umbenannt und als Ergebniscode 0 oder 1 zurückgegeben.

Danach wird in Fig. 4 das Ergebnis aus 'play.dat' ausgelesen und nach HTML umformatiert.

Soweit handelt es sich um ein einfaches Spiel, welches in der gezeigten Form bereits von mehreren Benutzern konkurrierend benutzt werden kann, da es sich um eine Anwendung über einen HTTP-Server handelt. In diesem Beispiel tritt das Problem auf, daß der von dem Benutzer geschickte Spielzug sich auf einen Stand bezieht, der von einem anderen Benutzer geändert werden kann, während der erste Benutzer über den nächsten Zug nachdenkt. Sendet er dann seinen Zug ab, wird dieser möglicherweise als unzulässig zurückgewiesen oder führt zu einem unerwarteten Spielstand. Die zu untersuchende Frage besteht beispielsweise darin, bei welcher Gestaltung der Oberfläche der Benutzer am wenigsten verwirrt ist. Denn durch Modifikation des in Fig. 4 gezeigten Programms kann das Verhalten geändert werden; beispielsweise können die Fehlermeldungen verbessert werden oder Reservierungen des Spielstands bis zu einem Zug eingeführt werden.

Auf jeden Fall wird deutlich, daß eine Trennung zwischen einer Anzeigeeinheit, im Beispiel durch den (nicht gezeigten) Browser und das Script nach Fig. 4, sowie einer Transaktionseinheit, hier repräsentiert durch das Programm nach Fig. 5, vorliegt.

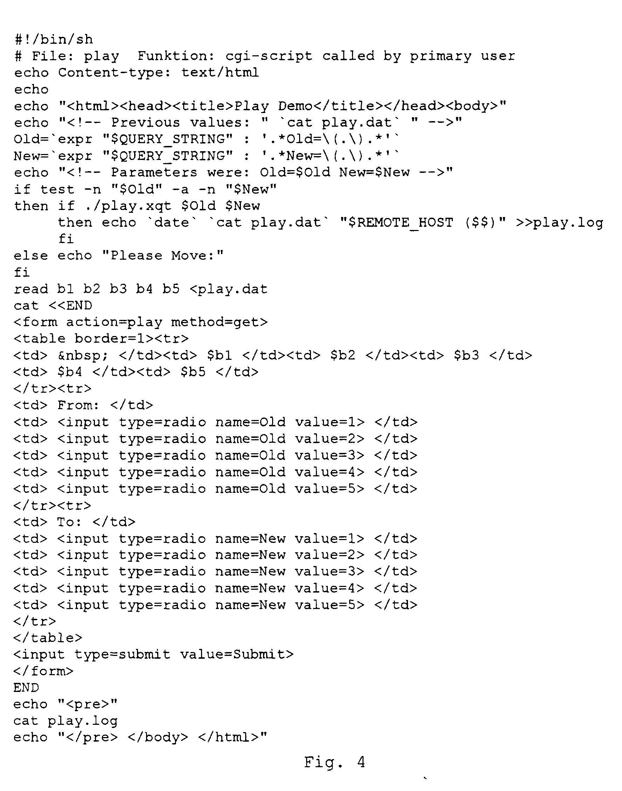

In Fig. 3 ist nun ein weiteres Script dargestellt, welches einen weiteren Benuzter, im folgenden Agent genannt, simuliert. Zunächst wird wieder der Spielstand ausgelesen. Ist die zweite Spalte besetzt, wird versucht, von dieser auf eine zufällig ausgewählte andere der Positionen 3 bis 5 zu verschieben. Anderfalls wird auf die erste Position geprüft und gegebenfalls auf eine der Positionen 2 bis 5 verschoben. Danach wird eine zufällige Zeit, hier im Intervall von 1 bis 5 Sekunden, gewartet.

Damit ergibt sich folgendes Verhalten des Agenten: Dieser versucht, eine Akkumulation der Steine in den ersten beiden Positionen zu verhindern. Er bedient sich derselben Anwendung nach Fig. 5, und verwendet den Spielstand, um den nächsten Zug vorzubereiten. In einer realistischen Anwendung würde der Stand wesentlich komplexer aufgebaut und zu analysieren sein. Auch wird in einer Weiterbildung die Ausgabe an die Benuzteranwendung wie auch die Reaktion des Benuzters mit in die Strategie des Agenten einfließen.

Der Agent nach Fig. 5 ist insofern eingeschränkt und besonders vereinfacht, als er auf den Spielstand direkt über die Datei 'play.dat' zugreift. Es ist jedoch gerade mit der Programmiersprache 'perl' problemlos möglich, einen Spieler zu simulieren, d.h. eine Anfrage der Form "hhtp://localhost/cgi-bin/play" zu senden, aus der Ausgabe nach Fig. 6 die erste Zeile der ersten Tabelle zu extrahieren, welche den Spielstand darstellt, den Zug zu bestimmen und eine neue Anfrage der Form "http://localhost/cgi-bin/play?Old=1&New=4" zu senden, und so fort. Ein solcher Agent ist in Fig. 7 gezeigt. In einer durch die Konstruktion "while (1) { ... }" gebildeten Endlosschleife wird zunächst über einen Aufruf von 'fetch()', d.h. ohne Parameter, der aktuelle Zustand ermittelt, indem ein Request ähnlich "HTTP://localhost/cgi-bin/play" erzeugt wird und in der Antwort des Servers nach Tabellenzellen gesucht wird, die ausschließlich Ziffern enthalten.

Gegebenenfalls wird durch erneutes Aufrufen von 'fetch', diesmal mit Parametern, ein Zug versucht. Ob dieser erfolgreich war, kann ignoriert werden. Danach wird in jedem Fall eine zufällige Zeit gewartet und dann die Schleife wiederholt.

Für die Berücksichtigung des Benutzerverhaltens kann einerseits das Script nach Fig.4 so verändert werden, daß die Eingaben von dem Benutzer und die Ausgaben an den Benutzer über Dateien oder andere Inter-Prozesskommunikation den Agenten zu Verfügung stehen. Eine solche Einrichtung kann als Spion bezeichnet werden. Bevorzugt wird dabei die als 'HTTP-PROXY' bekannte Technik verwendet. Bei dieser wird der Browser veranlaßt, die Anfrage an einen Vermittler, 'proxy server' genannt, zu senden, der die Anfrage in eigenem Namen an den eigentlichen Server sendet, die Antwort abwartet und an den Browser zurückschickt. Der Vermittler hat damit vollständigen Zugriff auf die Ein- und Ausgabedaten für den Benutzer.

Die Progammierung der Agenten kann in herkömmlicher Art, wie im Beispiel angegeben, durch algorithmische Sprachen erfolgen. Alternaiv und bevorzugt werden jedoch aus der sogenannten künstlichen Intelligenz bekannte regelbasierte Systeme verwendet. Bei diesen wird ein Satz von Regeln aufgestellt, die aus einer, in der Regel komplexen, Vorbedingung, und einer damit bewirkten Aktion, bestehen.

Dieser Satz von Regeln wird von einem Programm interpretiert, welches nach jeder Veränderung alle Vorbedingungen erneut prüft, ob eine zutrifft. Die Formulierung des Verhaltens wird damit für den menschlichen Leser sehr übersichtlich. Auf der anderen Seite wird für die Ausführung eine hohe Rechenleistung benötigt, da die Regeln sehr häufig inspiziert und ausgewertet werden müssen, auch wenn keine Aktion erfolgt.

Die Struktur der Erfindung ist schematisch in Fig. 1 dargestellt. Eine Anwendung 10 empfängt Anfragen 13 vom einem Benutzerprogramm 12 und sendet daraufhin Antworten 14. Dieses ist durch Pfeile angedeutet. Die Agenten 19a und 19b können gleichermaßen Aufträge senden und Antworten empfangen. Sie können auch die Antworten 14 an das Benutzerprogramm 12 sowie dessen Anfragen 13 lesen.

Bevorzugt laufen die Komponenten der Erfindung, zumindest jedoch die Agenten und die Anwendung, auf getrennten Rechner ab, wie es im Beispiel für den Agenten nach Fig. 7 problemlos möglich ist, wenn 'localhost' durch 'my.server' o.ä. ersetzt wird. In diesem Fall wird das Zeitverhalten durch die zusätzlich durch die Agenten benötigte Rechenzeit nicht negativ beeinflußt.

In einer Weiterbildung der Erfindung stehen die Agenten untereinander in einer zusätzlichen Kommunikationsbeziehung, die in Fig. 1 nur durch die enge räumliche Kopplung dargestellt ist. Hierzu können die Agenten entweder Kommunikationskanäle aufbauen oder gemeinsame Datenbestände, bevorzugt im Speicher, verwenden. Ergibt die Analyse der Benutzerinteraktionen, daß dieser auf ein ein Objekt zugreifen kann; kann aber ein Benutzer immer nur ein Objekt reservieren, dann können die Agenten den oben beschriebenen Verklemmungszustand einstellen. Es kann dann festgestellt werden, ob der Primärtester den Verklemmungszustand in adäquater Weise angezeigt bekommt und von sich aus beispielsweise den Test abbricht, weil er erkannt hat, daß er allein diesen Konflikt nicht lösen kann. Insbesondere kann festgestellt werden, ob und wie lange der Primärtester irrtümlich den fehlerhaften Annahme unterliegt, es liege eine Fehlbedienung des Systems seinerseits vor. Erst die Lösung durch die Erfindung durch nur einen menschlichen Teilnehmer läßt eine zuverlässige Aussage über diese Aspekte zu.

## Patentansprüche

1. Einrichtung zum Testen einer Computer-Anwendung, die von mehreren Benutzern gleichzeitig bedienbar ist, wobei
- ein Interaktionsmodul für menschliche Benutzer vorgesehen ist, welches mit der Anwendung verbunden ist, und über die Verbindung Anfragen an die Anwendung sendet, Antworten der Anwendung annimmt, für eine Ausgabe-Einrichtung für den menschlichen Benutzer aufbereit und anzeigt, sowie eine von dem menschlichen Benutzer bediente Eingabeeinrichtung umfaßt und daraus Anfragen erzeugt, die in gleicher Art zyklisch an die Anwendung gegeben werden,
- ein oder mehrere durch ein Programm gesteuerte Agenten vorgesehen sind, die gleichfalls mit der Anwendung verbunden sind und die konkurrierend zu dem Interaktionsmodul Anfragen an die Anwendung senden und die Antworten entgegennehmen.

2. Einrichtung nach Anspruch 1, wobei das Verhalten des Agenten durch vordefinierte Regeln bestimmt ist.

3. Einrichtung nach Anspruch 1 oder 2, wobei das Verhalten des Agenten durch die Antworten beeinflußt wird.

4. Einrichtung nach Anspruch 1, 2 oder 3, wobei ein Spion die Anfragen des Interaktionsmoduls oder die Antworten der Anwendung an das Interaktionsmodul an mindestens einen Agenten weiterleitet, dessen Verhalten hierdurch beeinflußt wird.

5. Einrichtung nach einem der vorhergehenden Ansprüche, wobei mindestens zwei Agenten vorgesehen sind, die über einen zusätzlichen Datenkanal miteinander verbunden sind.

6. Einrichtung nach einem der vorhergehenden Ansprüche, wobei die Agenten und der Interaktionsmodul auf verschiedenen Rechnern ablaufen.

7. Agent für eine Einrichtung nach einem der Ansprüche 1 bis 6.

8. Verfahren zum Testen einer Computer-Anwendung, die von mehreren Benutzern gleichzeitig bedienbar ist, wobei
- ein Interaktionsmodul für menschliche Benutzer vorgesehen ist, welches Anfragen an die Anwendung sendet, Antworten der Anwendung annimmt, für eine Ausgabe-Einrichtung aufbereite und anzeigt, eine Eingabeeinrichtung bedient und daraus Anfragen erzeugt, die in gleicher Art zyklisch an die Anwendung gegeben werden,
- ein oder mehrere durch ein Programm gesteuerte Agenten konkurrierend zu dem Interaktionsmodul Anfragen an die Anwendung senden und die Antworten entgegennehmen.

9. Verfahren nach Anspruch 8, wobei das Verhalten des Agenten durch vordefinierte Regeln bestimmt ist.

10. Verfahren nach Anspruch 8 oder 9, wobei das Verhalten des Agenten durch die Antworten beeinflußt wird.

11. Verfahren nach Anspruch 8, 9 oder 10, wobei ein Spion die Anfragen des Interaktionsmoduls oder die Antworten der Anwendung an das Interaktionsmodul an mindestens einen Agenten weiterleitet, dessen Verhalten hierdurch beeinflußt wird.

12. Verfahren nach einem der vorhergehenden Ansprüche, wobei mindestens zwei Agenten vorgesehen sind, die über einen zusätzlichen Datenkanal ihr Verhalten gegenseitig beeinflussen.

13. Verfahren nach einem der vorhergehenden Ansprüche, wobei die Agenten und der Interaktionsmodul auf verschiedenen Rechnern ablaufen.

14. Computerprogramm entsprechend einem der vorhergehenden Ansprüche.
